# EUROPEAN PATENT APPLICATION

(11) **EP 3 240 370 A1**
(43) Date of publication of application: **01.11.2017**
(21) Application number: 16167284.5
(22) Date of filing: 27.04.2016
(51) Int. Cl.: H05B 37/02, H04L 1/00, H04L 12/24, H04L 12/40

(54) **METHOD AND APPARATUS FOR MONITORING EVENTS OF INTEREST OCCURRING ON A LIGHTING CONTROL BUS**

(71) Applicant: Helvar Oy Ab, 02150 Espoo (FI)
(72) Inventor: Ellwood, Simon, Dartford, Kent DA2 7SY (GB)
(74) Representative: Berggren Oy, Helsinki & Oulu

(57) **Abstract**

A method and device (109) are provided for monitoring events of interest occurring on a lighting control bus (108). Waveforms are received by a waveform logger (202) from said lighting control bus and temporarily stored in the form of sequences of samples. Data signals are received by a bus communications interface (203) and a protocol logger (204) from said lighting control bus and temporarily stored in the form of sequences of bit values. At least one of the received waveforms and the received data signals are compared by a processor (205, 206) to a set of rules, said rules defining allowable forms of signals on said lighting control bus, so that contradicting at least one rule indicates an event of interest. Initially said received waveforms and received data signals are stored temporarily, and as a response to a detected event of interest at least one of the temporarily stored waveforms and temporarily stored data signals are preserved.

## Description

### FIELD OF THE INVENTION

The invention relates to lighting control buses and networks. In particular the invention relates to detecting, storing evidence of, and analysing situations in which a device coupled to the lighting control bus behaves in an exceptional and potentially harmful way.

### BACKGROUND OF THE INVENTION

A lighting control bus is a shared physical medium used for communications between various devices such as luminaires, switches, dimmers, sensors, controllers, routers, and the like, for the purpose of making the lighting system provide light in a desired way. Together the bus and the devices constitute a lighting control network. An example of a lighting control bus is the DALI bus (Digital Addressable Lighting Interface), the standard of which was first drafted in the late 1990's and later adopted as IEC 62386. At the time of writing this description a thorough revision and extension of the DALI standard is worked upon under the preliminary name DALI 2.

Standardising the bus aims at ensuring that a working lighting control network can be built, managed, changed, and extended according to need in a versatile way using devices and components from different manufacturers. Practice has shown that this ambitious aim is not always reached, but various malfunctions and erratic behaviour of the devices coupled to the bus are observed. Reasons for the anomalies may vary, and include system overload, wrong cable type, excessive length of cables, external electromagnetic interference, insufficient power supply, faulty and/or non-compliant products, and others.

A lighting control bus that does not work at all, for example because the wires have been disconnected or because one of the devices keeps the bus permanently reserved, is typically relatively straightforward to diagnose and repair. More challenging are cases in which the lighting control network operates almost, but not completely, as it should. The most difficult to diagnose and correct are events that occur infrequently and/or in a seemingly random fashion. Once an expert gets some kind of measured results that describe what was and/or is happening on the bus, finding the actual cause and devising a solution become possible. However, replicating the abnormal incident or malfunction under controlled conditions for measurement may be difficult: the problem may occur for example only on the first Tuesday of each month or once every 27.5 hours. Allocating an expert to replicate the problem and to find a cure may be time-consuming, frustrating, and expensive.

Lighting control buses share certain typical features that make them very different from data buses used for communications between computers. While data networks that use optical fibre may reach bit rates of dozens of gigabits per second, and even copper cabling allows reaching hundreds of megabits per second, the bit rates of lighting control buses are typically measured in kilobits per second. Cost pressures are severe in building and maintaining lighting control networks, which means that very simple solutions are preferred; for example a DALI bus only requires two wires that can be connected to the devices on the bus regardless of polarity by simply pushing the stripped wire ends to the appropriate connectors. Lighting control networks may be relatively independent in their operation: for example a large building may have hundreds of lighting control networks, each operating under its own central controller, with an external control connection to and from the central controller that is only used for relatively infrequent remote monitoring tasks.

Another typical feature of lighting control buses is the existence of roles that are defined for the various devices that can be coupled to the bus. The roles define factors like the level of rights that the devices have to using the bus, timing and frame formats that they must use in their transmissions, command sets they must use in transmitting and receiving, and the like. Examples of roles are:
- Input device: a control device that can provide information, or inputs, to the system; for example a sensor or a control panel on the wall
- Application controller: a control device that can make decisions based on inputs, and send commands to other devices; the "brain" of the lighting system
- Control gear: a device that receives commands from the bus and makes things happen according to the commands; for example the driver device of a luminaire.

A prior art document WO 2010/043263 discloses an interface device that can be coupled between a computer and the DALI bus for the purpose of monitoring the state of the bus and for gaining control to the electronic operating devices of luminaires that are connected to the bus. While the device may have certain use for the specialist dispatched to an installation site with reported problems, it does not solve the problem of replicating the abnormal incident or malfunction under controlled conditions.

### SUMMARY OF THE INVENTION

It is an object of the present invention to provide an apparatus and method that enable effective, convenient and versatile analysis of events of interest that take place on a lighting control bus.

The objects of the invention are reached by apparatuses, methods, and a computer program as defined by the respective independent claims.

According to a first aspect of the invention there is provided an apparatus for monitoring occurring on a lighting control bus. The apparatus comprises:
- a network interface for coupling the apparatus to the lighting control bus,
- a waveform logger coupled to said network interface for receiving waveforms from said lighting control bus,
- a bus communications interface and protocol logger coupled to said network interface for receiving data signals from said lighting control bus, and
- a processor coupled to said bus communications interface for comparing at least one of the received waveforms and the received data signals to a set of rules, said rules defining allowable forms of signals on said lighting control bus, so that contradicting at least one rule indicates an event of interest,
wherein said apparatus is configured to connect to and communicate on the lighting control bus in the role of a standardized network node,
and wherein processor is configured to respond to a detected event of interest by instructing at least one of the waveform logger and the protocol logger to store received waveforms or received data signals respectively.

According to a second aspect of the invention, there is provided a method for monitoring events of interest occurring on a lighting control bus. The method comprises:
- receiving waveforms from said lighting control bus,
- receiving data signals from said lighting control bus, and
- comparing at least one of the received waveforms and the received data signals to a set of rules, said rules defining allowable forms of signals on said lighting control bus, so that contradicting at least one rule indicates an event of interest,
wherein said receiving of waveforms and data signals involves connecting to and communicating on the lighting control bus in the role of a standardized network node,
and wherein as a response to a detected event of interest at least one of received waveforms and received data signals are stored.

According to a third aspect of the invention there is provided a computer program comprising machine-readable instructions that, when executed by one or more processors, are configured to cause the implementation of a method of the kind described above.

The computer program may be embodied on a volatile or a non-volatile computer-readable record medium, for example as a computer program product comprising at least one computer readable non-transitory medium having program code stored thereon, the program code, which when executed by an apparatus, causes the apparatus at least to perform the operations described hereinbefore for the computer program in accordance with the third aspect of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1 illustrates a number of lighting control networks,
figure 2 illustrates an apparatus according to an embodiment of the invention, and
figure 3 illustrates possibilities of remotely controlling an apparatus according to an embodiment of the invention.

### DETAILED DESCRIPTION

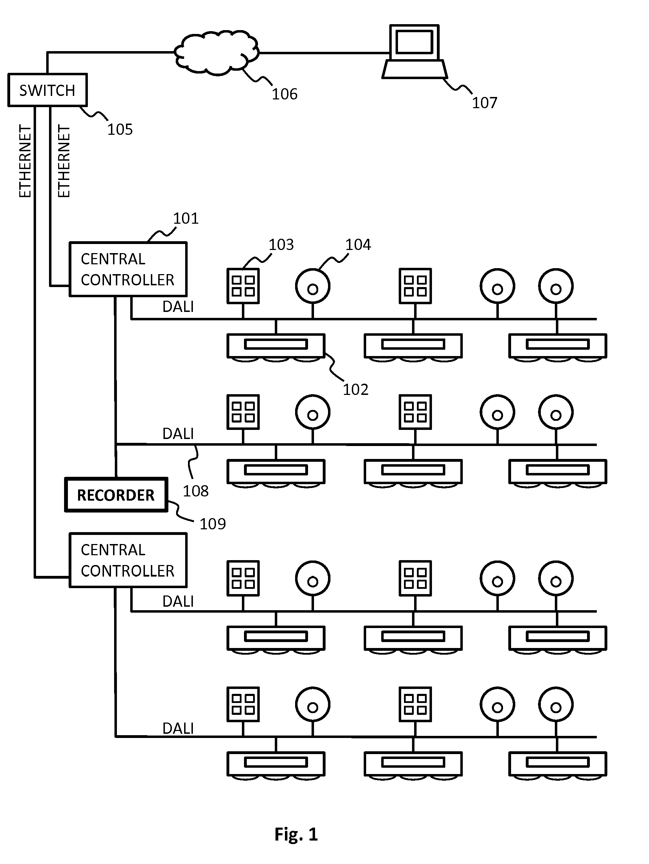

Fig. 1 illustrates an arrangement that comprises a number of lighting control networks. A central controlling device of each lighting control network is called a central controller, of which the central controller 101 is an example. In some systems the central controller is called a router. Sophisticated central controllers may manage a number of lighting control networks; fig. 1 shows an example in which each central controller manages two lighting control networks. A central controller may manage and/or connect to several kinds of lighting control and house automation networks, such as S-DIM, DMX, DALI, and others. Again as an example (and to maintain graphical clarity) fig. 1 only shows two DALI networks under each central controller. Known devices that can connect to and constitute nodes in a DALI network are luminaires 102, control panels 103, and sensors 104. There may be other kinds of connected devices, such as controllable window shades or HVAC devices.

An external control connection may exist at each central controller. In fig. 1 the central controllers have an Ethernet connection to a switch 105, from which there is a further connection through the internet 106 to a remotely located control computer 107. A control computer could be connected directly to the switch 105, or even directly to the central controller 101.

In fig. 1 there has been a reason to believe that events of interest may occur on the lighting control bus 108 managed by the central controller 101. Therefore an apparatus 109 for monitoring events of interest has been coupled to the lighting control bus 108. An event of interest typically means an anomaly, or a situation in which something on the bus is not as it should be, although in some cases an event of interest may be within the limits of normal behaviour as such but just significant enough to justify closer examination. The users working on the area served by that lighting control network may have noticed that the lighting does not work properly, or the user of the remotely located control computer 107 may have noticed some alarms or exception messages coming from the central controller 101. It is also possible that no events of interest have occurred yet, but the lighting control bus 108 has a particularly complicated topology or some new devices or devices from several different manufacturers coupled to it, which is expected to cause anomalous behaviour or other kinds of events of interest on the bus. Yet another possibility is that an apparatus 109 for monitoring events of interest is installed to each lighting control network by default. The apparatus 109 may be called an automatic DALI recorder, or just recorder for short.

Concerning the standard-regulated topology and operation of the lighting control network the apparatus 109 is just one more node. It connects to the physical transmission medium of the lighting control bus with a similar physical connection interface as the other devices, and it is configured to communicate on the lighting control bus in the role of a standardized network node. It has an address in the network, taken from the regular address space available for network nodes. The central controller 101 has recognized it as a network node and listed it among the nodes that are present in the network, as a central controller does for all regular nodes. The apparatus 109 can take part in the communications on the bus according to the standardized communications protocol that is also used for the normal operation of the lighting control network. In particular, it can maintain bidirectional communications with (at least) the central controller 101 of the lighting control network in which it appears as a node.

Assuming that the lighting control bus is a DALI bus, as in fig. 1, a practical example of the apparatus 109 being a node in the network and having the role of a control device means that the apparatus 109 qualifies under part 103 of the DALI standard (where "part 103" only refers to the correspondingly numbered part of the standard and does not refer to fig. 1). Simultaneously it also qualifies under part 101 (which also only refers to the correspondingly numbered part of the standard) of the DALI standard - this is the basic part which all devices on the bus must conform with, while part 103 is the one associated with the role of a control device.

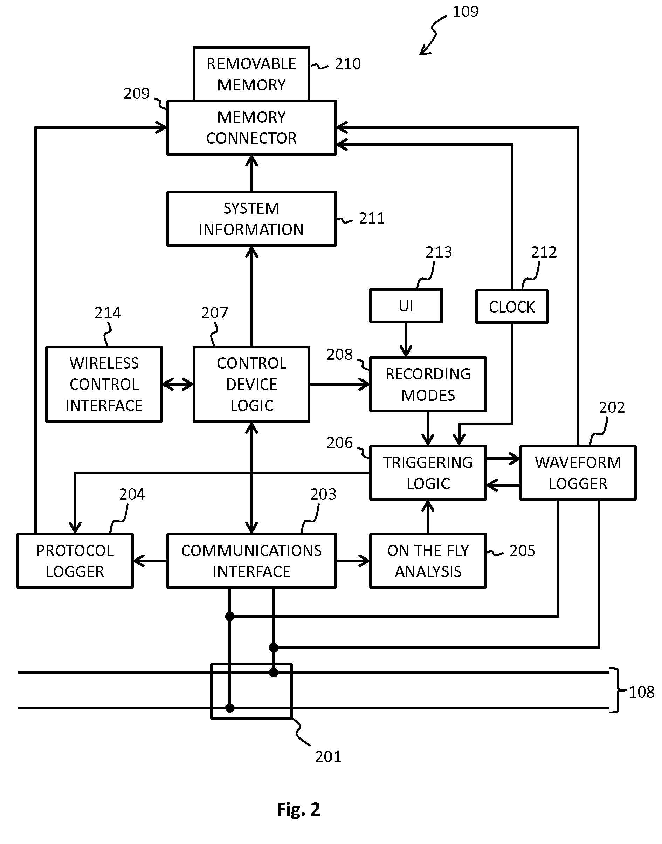

Fig. 2 is a more detailed schematic illustration of the apparatus 109 for monitoring events of interest occurring on a lighting control bus 108. The apparatus comprises a network interface 201 for coupling the apparatus to the lighting control bus 108. Assuming that the last-mentioned is a DALI bus as in the example of fig. 1, the network interface 201 may be simply a two-pole connector for the two wires that constitute the physical medium as defined in the DALI standard. If the lighting control bus conforms to some other standard, the network interface 201 should be implemented as defined in such other standard.

The apparatus 109 comprises a waveform logger 202 coupled to the network interface 201. The purpose of the waveform logger 202 is to receive analog waveforms or the so called raw signals from the lighting control bus 108, and to convert them into suitable form for storing. The waveform logger 202 may comprise a sampling A/D converter configured to sample the voltage between the two wires of the DALI bus and express the voltage samples in digital form. The sampling frequency should be significantly higher than the characteristic bit rate at which bit values appear on the bus, in order to make a reasonable difference between receiving waveforms and receiving data signals. The sampling rate may be for example in the order of one million samples per second, or some millions of samples per second. The sampling resolution may be for example 10 or 12 bits.

The received waveforms are logged, i.e. stored at least temporarily in the waveform logger 202 so that it is possible to examine, how the actual voltage between the wires of the DALI bus behaved at the moment when the waveform was received. It is also possible that the waveform logger 202 samples separately the potential difference between each individual wire of the DALI bus 108 and a reference potential and stores these samples.

The apparatus 109 comprises also a bus communications interface 203 and protocol logger 204. These are coupled to the network interface 201 for the purpose of receiving data signals from the lighting control bus 108. While the purpose of the waveform logger 202 is to sample and store the analog voltage waveforms (i.e. the raw signals), the bus communications interface 203 and protocol logger 204 concentrate on the digital data signals that are carried by said waveforms. For this purpose the bus communications interface 203 comprises suitable detection logic, the detailed implementation of which depends on the code convention that is employed on the lighting control bus 108. For example if the code convention on the lighting control bus 108 is Manchester coding according to IEEE 802.3, the bus communications interface 203 is configured to interpret each low-to-high transition in the voltage between the bus lines as a logical value 1, and each high-to-low transition as a logical value 0.

By default the protocol logger 204 stores the received and detected data signals in a form that conforms to the communications protocol applied on the lighting control bus 108. For example, if the communications protocol is DALI, which defines 19-bit forward frames and 11-bit backward frames, by default the protocol logger 204 is configured to store the received and detected data signals in the form of 19-bit and 11-bit words respectively. However, since the purpose of the apparatus 109 is to monitor events of interest and since one possible form of events of interest comprises non-compliant frames, it is advantageous to configure the protocol logger 204 so that it is ready to store the received and detected data signals also in the case that their form and content differ from what is defined in the communications protocol.

For the purpose of monitoring events of interest it is of limited significance to store waveforms (as in the waveform logger 202) and data signals (as in the protocol logger 204) if they represent just ordinary data traffic on the bus that proceeds completely as expected. In order to focus the storing on the more important cases the apparatus 109 comprises a processor coupled to the bus communications interface 203, for comparing the received waveforms and/or the received data signals to a set of rules. These rules define allowable forms of signals (waveforms and/or data signals) on the lighting control bus 108, so that contradicting at least one rule indicates an event of interest. Thus while the waveform logger 202 and the protocol logger 204 are configured to temporarily store received waveforms and received data signals respectively, the processor is configured to respond to a detected event of interest by instructing at least one of the waveform logger and the protocol logger to preserve temporarily stored waveforms or temporarily stored data signals respectively. Preserved waveforms and data signals are available for further examination later.

Whether the reactions of the processor are based on the received signals "satisfying" or "contradicting" rules is a matter of viewpoint or linguistic convention rather than technical implementation. Saying that some rules define allowable forms of signals means that everything that does not satisfy the rules is an exception and constitutes an event of interest. Saying that some rules define events of interest to which the processor should react represents the opposite viewpoint. A simple example is the rising time of a voltage pulse, for which a maximum duration has been defined in a communications standard. According to the first viewpoint all pulses with a rising time shorter than the defined maximum satisfy the rule and are thus not interesting, while a pulse that rises slower than the limit contradicts the rule and is an event of interest. According to the second viewpoint the rule is "watch out for pulses with a rising time longer than the defined maximum", so that any pulse that satisfies this rule is an event of interest. Practical programmed processes often involve incorporating both viewpoints simultaneously in "if-then-else" type decisions where the execution of the process is diverted into different branches according to on which side of the defined limiting value an observation fell.

Making the rules define the allowable forms of signals, rather than making the rules define explicitly the cases that are to be classified as events of interest, involves the advantage that the author of the rules doesn't need to predict all anomalous situations that may occur on the bus and that would be important to store for further analysis. Such a case means a quite literal interpretation of the phrase "contradicting at least one rule indicates an event of interest". On the other hand making the rules define explicitly the cases that are to be classified as events of interest involves the advantage that the later analysis of stored information can be focused very exactly, and storage capacity will not be wasted by storing some insignificant interference that didn't actually cause any anomalous behaviour on the bus or in the devices connected to it.

The exact way of writing the rules can be decided on the basis of routine experimentation. Since communications that proceed strictly according to the definitions laid down in a standard are less likely to cause anomalous behaviour, and since the standard is by definition a set of rules, and also for the purpose of avoiding linguistic ambiguity, this description applies consistently the so-called first viewpoint, according to which the rules define allowable forms of signals and contradicting at least one rule indicates an event of interest. Based on the explanation of linguistic convention above, for practical purposes this selected linguistic convention covers also those cases where the rules are actually the criteria of exceptionality, so that satisfying at least one rule indicates an event of interest.

Some possible functions of said processor are shown in a distributed manner in fig. 2. The on-the-fly analysis block 205 represents a function in which data signals that have been received and detected are subjected to compatibility analysis. Anomalous, non-compatible data signals that may constitute an event of interest include (but are not limited to) the following:
- missing backward frame after a forward frame (or write memory command) that would require one
- a backward frame without a preceding forward frame (or write memory command)
- a frame with incorrect start and/or stop bit values
- a frame addressed to a device address that is not in use
- a frame including payload data that does not fit the current context (for example: a response that does not meet the command or query)
- a frame that is non-standard in some other way.

Similarly the waveform logger 202 may be configured to detect anomalous effects in waveforms and/or other events of interest such as:
- insufficient difference between high and low line voltages
- fluctuation or change in the high and/or low line voltage over time
- jitter in the timing of line voltage transitions
- exceptionally steep or exceptionally slow voltage transitions
- fluctuation or change in the slope of voltage transitions over time
- a waveform that is non-standard in some other way.

In the approach illustrated in fig. 2 the on-the-fly analysis block 205, and possibly also the waveform logger 202, reports a detected event of interest to a triggering logic 206, which responds by triggering the preserving of the temporarily stored waveforms or temporarily stored data signals respectively. In the absence of any trigger it is assumed that the temporarily stored waveforms did not contain events of interest and can therefore be discarded. The amount of waveform samples and data signals that are stored temporarily before discarding can be decided depending on the storage capacity available in the waveform logger and protocol logged, and also depending on the nature of the communications protocol. The last-mentioned is based on the thought that the communications protocol implies certain regularities between consecutive actions on the bus: for example if the communications protocol stipulates that each query-and-response round on the bus must take place within a certain maximum period of time, and if the detected event of interest concerns a response, it may be sufficient to preserve the immediately preceding query and all detected reactions to it.

The existence of an on-the-fly analysis block 205 and a triggering logic 206 in the apparatus 109 reflects an approach according to which the step of comparing the received waveforms and/or received data signals to a set of rules and the step of preserving the stored waveforms and/or stored data signals are performed in the same device. Additionally or alternatively the central controller or other intelligent device coupled to the same bus may take some responsibility in detecting events of interest. Thus the step of comparing the waveforms and/or the data signals to a set of rules may be performed in a central controller (or other intelligent device) and the step of preserving the stored waveforms and/or stored data signals may be performed in a the apparatus 109 as a response to an explicit recording command that it received from the central controller. Since the lighting bus constitutes a communications channel between the central controller and the apparatus 109, the apparatus 109 may receive said explicit recording command through the lighting control bus 108. On the other hand if the central controller and the apparatus 109 are located close enough to each other, like in the same device rack, it is also possible that there is a dedicated command channel between the two for ensuring that the explicit recording command is properly received by the apparatus 109 even if the detected event of interest is of the kind that makes ordinary communications on the lighting control bus difficult or impossible.

For receiving and executing explicit recording commands of the kind described above, and also for executing other programmable functions, the processor of the device 109 is configured to perform control functions that are illustrated as the control device logic block 207 in fig. 2. Data signals that are received through the lighting control bus 108 and found to be either broadcast commands, group commands directed to a group in which the apparatus 109 is a member, or point-to-point commands addressed to the apparatus 109, are delivered from the bus communications interface 203 to the control device logic block 207, which interprets them and acts accordingly. In the schematic representation of fig. 2 a received explicit recoding command could cause the control device logic block 207 to convey an appropriate command to a recording modes block 208, which in turn would instruct the triggering logic 206 to send the appropriate trigger to the waveform logger 202 and/or the protocol logger 204.

Irrespective of whether the trigger comes as a response to an event of interest that the apparatus 109 itself detected or as a response to an explicit recording command from another device, it may be advantageous to preserve not only the event of interest itself but also some of the waveform(s) and/or data signals that preceded the event of interest. This kind of operation may be called pre-trigger functionality. It may also be advantageous to preserve some of the waveform(s) and/or data signals that followed the event of interest. The processor of the apparatus 109 may be configured to respond to a detected event of interest or an explicit recording command by instructing the waveform logger 202 and/or the protocol logger 204 to preserve stored waveforms or data signals respectively from a time period ranging from a first instant preceding the detected event of interest to a second instant following the detected event of interest.

The pre-trigger functionality mentioned above relies upon the temporary storing of waveforms and data signals. Temporary storing in the waveform logger 202 and the protocol logger 204 takes place with respect to a sliding time window, so that if no events of interest are detected, the oldest temporarily stored waveforms and data signals are always discarded as the most recent ones come in. A trigger from the triggering logic 206 freezes the time window so that the moment at which the currently oldest waveform or data signal was received becomes the mentioned first instant. Storing and preserving continues for a predefined delay after the trigger, so that the time at which it ends becomes the mentioned second instant.

If the generation of triggers, i.e. the step of comparing at least one of the received waveforms and the received data signals to a set of rules, is performed in the central controller, it may be advantageous to make the sliding time window longer than if the triggers are generated internally in the apparatus 109 itself. Data rates on lighting control buses are nowhere near to those on local communications buses between computers, and the explicit recording command may need to wait if there is other traffic of higher priority on the bus. The length of the sliding time window may be in the order of minutes. A relatively long sliding time window may be advantageous even if the triggering is internal to the apparatus 109, because it may ensure that all such preceding traffic on the bus becomes preserved that actually had a role in causing the effect of interest.

Several possibilities exist for making the preserved waveforms and data signals accessible to further analysis later, which is typically at least partly made by a specialist. In the embodiment of fig. 2 the apparatus 109 comprises a connector 209 for a removable memory medium 210 and couplings from the waveform logger 202 and the protocol logger 204 to said connector 209. This enables the waveform logger 202 and the protocol logger 204 to store waveforms and data signals respectively on the removable memory medium 210 coupled to said connector 209. The removable memory medium 210 may be for example a memory card or an external solid-state hard drive such as a memory stick.

The use of a removable memory medium 210 is advantageous for example in a case where bringing a specialist on location to investigate the lighting system would be inconvenient and/or expensive. In such a case a property caretaker, facility manager, or some other operator may be instructed to collect the removable memory medium 210 after a suitable period of time and to send it to the specialist - or use a general-purpose computer to transfer the stored data to the specialist electronically - for analysis. Another advantage of using a removable memory medium 210 becomes actual if there are particularly many instances of waveforms and/or data signals that need to be preserved. A fixedly installed memory in the apparatus 109 could fill up so fast that reading and emptying it sufficiently often would be burdensome. In such a case it is easier and faster to just collect the full removable memory medium 210 and install a new one.

The system information block 211 of the apparatus 109 may comprise information about the apparatus itself as well as information about the lighting control network to which the apparatus is coupled through the lighting control bus 108. In many cases it is advantageous to make the apparatus store at least some of said system information on the removable memory medium 210, because extensive information about the system may significantly increase the possibilities of finding out the actual cause of the events of interest and to plan the appropriate solution. System information of said kind includes, but is not limited to, the following:
- GTIN number, manufacturer, product name, serial number, and/or other identifier(s) of the apparatus itself and/or of other devices in the lighting control network
- version number(s) of software, firmware, and other sets of machine-readable instructions currently stored in the apparatus itself and/or in other devices in the lighting control network
- historical data of devices and/or software versions that have been in use in the lighting control network previously, and the times at which they have been in use
- statistical data about previously detected events of interest concerning which there are no stored waveforms or data signals any more.

The clock 212 of the apparatus 109 is coupled at least to the triggering logic 206 and to the connector 209 for a removable memory medium 210. The clock 212 enables triggering actions in a time-related manner, as well as timestamping waveforms and data signals that are preserved for future analysis.

The apparatus 109 may comprise a user interface 213 that makes it possible to exchange simple information and commands between the apparatus and a user. The user interface 213 may include e.g. indicator LEDs that tell the user about the operational status and ongoing activities etc. of the apparatus 109. The user interface 213 may also include pushbuttons, switches, dials, and other kinds of simple means for the user to give commands to the apparatus 109. It is possible to realize the user interface 213 at least partly in the form of a touch-sensitive display or pad.

The apparatus 109 may comprise a remote control interface for receiving remote control commands. According to one embodiment, the remote control interface is a functionality of the bus communications interface 203, which means that remote control commands can be transmitted to the apparatus 109 in the form of properly addressed frames on the lighting control bus 108. This embodiment involves the advantage that the hardware structure of the apparatus is not complicated by the provision of a remote control interface. According to other embodiments the remote control interface is a wired network interface different from the bus communications interface, or a wireless network interface. These embodiments involve the advantage that the apparatus can receive the remote control commands also in situations where communications through the lighting control bus are not possible for some reason. The embodiments concerning the remote control interface are not mutually exclusive, but the apparatus may comprise two or more different remote control interfaces.

Remote control commands may involve e.g. commands to turn recording on or off, commands to change recording mode, and/or commands to perform some preprogrammed routines like self-testing. The remote control interface, if provided, may be bidirectional so that the apparatus 109 may respond to remote control commands. For example, a remote control command may be an instruction to report status, to which the apparatus 109 would respond by sending a status report. Remote control commands may be sent to the bus communications interface 203 for example from a lighting control program such as the Designer software suite available from Helvar Ltd., Hawley Mill, Hawley Road, Dartford, United Kingdom. The user operating the computer with the Designer software suite may simultaneously use the features of the program to follow what happens in the lighting control network.

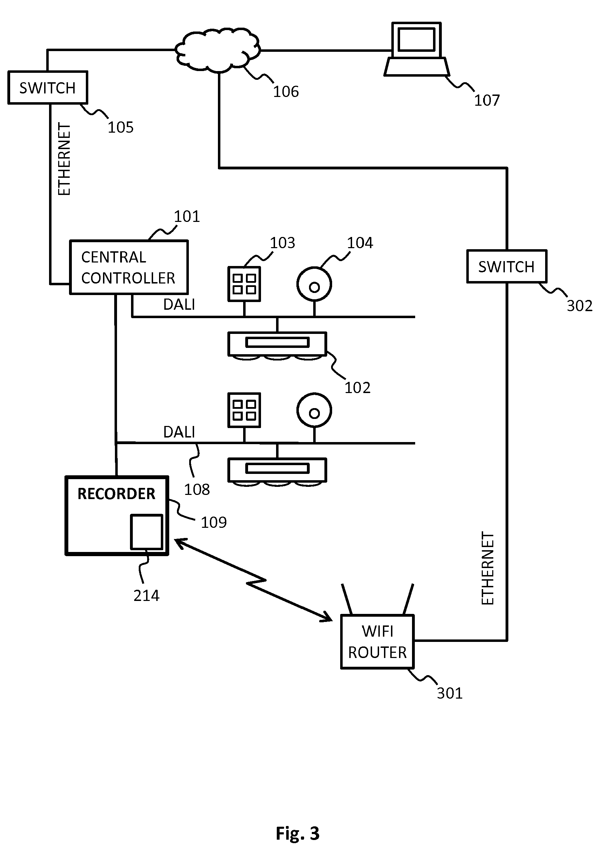

Alternatively or additionally to using the bus communications interface 203 for remote controlling, the apparatus 109 may comprise a dedicated remote control interface, such as the wireless network interface 214 in fig. 2. An example of using a wireless network interface for remote controlling is illustrated schematically in fig. 3. In addition to the lighting control network(s) there is a wireless data network, such as a WPAN (wireless personal area network), WLAN (wireless local area network), wireless mesh network, WMAN (wireless metropolitan area network) or the like. The wifi router 301 is shown as an example of device that sets up at least a part of such a wireless data network. From the wifi router 301 there is a communications connection to the internet 106 through a switch 302, which may be the same or a different one than the switch 105 through which the central controllers connect to the internet 106. A remotely located control computer 107 may perform remote control of the apparatus 109, utilizing the wireless network interface 214 of the last-mentioned.

An arrangement like that in fig. 3 is advantageous, because the remote control connection can utilize the possibly much higher data rate and much lower latency of the wireless data network, without being constrained by the limitations that apply in the lighting control network. However, not all proprietors and/or operators of wireless data networks are willing to grant the apparatus 109 and access to their networks, or at least accessing the wireless data network may require manually entering a network ID, a password, or other authentication data in the apparatus 109. Therefore it may be recommendable to both equip the apparatus 109 with a wireless network interface 214 and to prepare for using the bus communications interface 203 for remote controlling. The last-mentioned is most advantageously done by programming the processor of the apparatus to perform the necessary functions.

It is particularly advantageous to configure the processor of the apparatus to transmit data signals to other devices through the bus communications interface 203. Such transmitted data signals may involve e.g. responses to queries received from other devices that are coupled to the same lighting control bus 108, or queries that the apparatus 109 sends to other devices coupled to the lighting control bus 108. An example of the former is responding to a query sent by the central controller that acts as the central controller of the lighting control bus. The central controller may e.g. request the apparatus 109 to respond with its GTIN code, product name, serial number, software version, or other identification data, which the central controller may then convey further over e.g. a long-distance computer network connection. An example of a query to another device coupled to the lighting control bus is a query in which the apparatus 109 asks some other device on the bus to provide its GTIN code, product name, serial number, software version, or other identification data, which the apparatus 109 could then store as a part of the system information 211.

The standard specifications of the lighting control bus may define various allowable roles for devices that are coupled to the bus and use it for communications. For example the DALI standard recognizes the roles of a Single Master (in some sources: Single Central Master or SCM) and Multi Master (MM). If the apparatus 109 only needs to passively react to events of interest detected on the lighting control bus, and possibly respond to queries from a central controller, it may suffice to leave the apparatus 109 without any Master level rights. However, if the apparatus 109 should be permitted to make transmissions of its own initiative on the lighting control bus 108, it should appear as a Multi Master on the bus.

The features and embodiments of the invention that have been described above are presented as examples, and numerous modifications and combinations are possible. For example, although the lighting control bus has so far been exclusively described as a wired bus, it is possible to apply the same principles to cases in which the shared medium for internal communications in the lighting control system consists of bandwidth for wireless transmissions. Also, even if the examples above have only involved one recorder apparatus in the lighting control network, the invention does not exclude installing two or more apparatuses in the same lighting control network. For example installing two apparatuses at opposite extremities of the physical transmission medium may give enlightening results about the behaviour of waveforms and/or data signals along the length of the lighting control network.

## Claims

1. An apparatus for monitoring events of interest occurring on a lighting control bus, the apparatus comprising:
- a network interface for coupling the apparatus to the lighting control bus,
- a waveform logger coupled to said network interface for receiving waveforms from said lighting control bus,
- a bus communications interface and protocol logger coupled to said network interface for receiving data signals from said lighting control bus, and
- a processor coupled to said bus communications interface for comparing at least one of the received waveforms and the received data signals to a set of rules, said rules defining allowable forms of signals on said lighting control bus, so that contradicting at least one rule indicates an event of interest,
wherein said apparatus is configured to connect to and communicate on the lighting control bus in the role of a standardized network node,
and wherein processor is configured to respond to a detected event of interest by instructing at least one of the waveform logger and the protocol logger to store received waveforms or received data signals respectively.

2. An apparatus according to claim 1, wherein:
said waveform logger and said protocol logger are configured to temporarily store received waveforms and received data signals respectively,
and wherein the processor is configured to respond to a detected event of interest by instructing at least one of the waveform logger and the protocol logger to preserve temporarily stored waveforms or temporarily stored data signals respectively.

3. An apparatus according to claim 1 or 2, wherein said processor is configured to respond to an explicit recording command received through the lighting control bus by instructing at least one of the waveform logger and the protocol logger to preserve stored waveforms or data signals respectively.

4. An apparatus according to any of the preceding claims, wherein the processor is configured to respond to a detected event of interest or an explicit recording command by instructing at least one of the waveform logger and the protocol logger to preserve stored waveforms or data signals respectively from a time period ranging from a first instant preceding the detected event of interest to a second instant following the detected event of interest.

5. An apparatus according to any of the preceding claims, comprising a connector for a removable memory medium and couplings from said waveform logger and said protocol logger to said connector for enabling said waveform logger and said protocol logger to store waveforms and data signals respectively on a removable memory medium coupled to said connector.

6. An apparatus according to any of the preceding claims, comprising a remote control interface for receiving remote control commands.

7. An apparatus according to claim 6, wherein said remote control interface is one of the following: a functionality of said bus communications interface, a wired network interface different from said bus communications interface, a wireless network interface.

8. An apparatus according to any of the preceding claims, wherein said processor is configured to transmit data signals to other devices through said bus communications interface.

9. An apparatus according to claim 8, wherein said processor is configured to transmit at least one of the following:
- responses to queries received from other devices coupled to the lighting control bus,
- queries to other devices coupled to the lighting control bus.

10. A method for monitoring events of interest occurring on a lighting control bus, the method comprising:
- receiving waveforms from said lighting control bus,
- receiving data signals from said lighting control bus, and
- comparing at least one of the received waveforms and the received data signals to a set of rules, said rules defining allowable forms of signals on said lighting control bus, so that contradicting at least one rule indicates an event of interest,
wherein said receiving of waveforms and data signals involves connecting to and communicating on the lighting control bus in the role of a standardized network node,
and wherein as a response to a detected event of interest at least one of received waveforms and received data signals are stored.

11. A method according to claim 10, wherein:
received waveforms are temporarily stored in the form of sequences of samples,
received data signals are temporarily stored in the form of bit values, and
as a response to a detected event of interest at least one of the temporarily stored waveforms and temporarily stored data signals are preserved for further examination later.

12. A method according to claim 10 of 11, comprising at least one of the following:
- performing the step of preserving at least one of the stored waveforms and stored data signals in the same device as the step of comparing at least one of the received waveforms and the received data signals to a set of rules, or
- performing the step of preserving at least one of the stored waveforms and stored data signals as a response to an explicit recording command received from another device that performs the step of comparing at least one of the received waveforms and the received data signals to a set of rules.

13. A method according to any of claims 10 to 12, comprising:
- querying for identification information of at least one other device through said lighting control bus, said identification information including at least one of: GTIN code, product name, serial number, software version of said other device, and
- storing identification information received in response to such querying along with at least one of preserved waveforms and preserved data signals.

14. A method according to any of claims 10 to 13, comprising:
- sending identification information of the device that performs said temporary storing of received waveforms and received data signals to a central controlling device coupled the lighting control bus, said identification information including at least one of: GTIN code, product name, serial number, software version of the device that performs said temporary storing of received waveforms and received data signals.

15. A computer program comprising machine-readable instructions that, when executed by a processor of a device coupled to a lighting control bus, are configured to cause the implementation of a method comprising:
- receiving analog waveforms from said lighting control bus,
- receiving digital data signals from said lighting control bus, and
- comparing at least one of the received analog waveforms and the received digital data signals to a set of rules, said rules defining allowable forms of signals on said lighting control bus, so that contradicting at least one rule indicates an event of interest,
wherein said receiving of analog waveforms and digital data signals involves connecting to and communicating on the lighting control bus in the role of a standardized network node,
and wherein as a response to a detected event of interest at least one of received waveforms and received data signals are stored.
